**Europäisches Patentamt**

**European Patent Office**

**Office européen des brevets**

(19)

(11) **EP 1 285 692 A1**

(12) **EUROPEAN PATENT APPLICATION**

(43) Date of publication:
**26.02.2003 Bulletin 2003/09**

(51) Int Cl.⁷: **B01J 23/755**, B01J 35/02, C01B 3/40

(21) Application number: **02255757.3**

(22) Date of filing: **19.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **20.08.2001 JP 2001248974**
**26.10.2001 JP 2001329426**

(71) Applicants:
- **Hiroshima Industrial Promotion Organization Hiroshima-shi, Hiroshima-ken (JP)**
- **Toda Kogyo Corporation Hiroshima-shi, Hiroshima-ken (JP)**
- **MITSUBISHI HEAVY INDUSTRIES, LTD. Tokyo 100 (JP)**

(72) Inventors:
- **Takehira, Katsuomi Higashi-hiroshima-shi, Hiroshima-ken (JP)**

- **Shishido, Tetsuya Higashi-hiroshima-shi, Hiroshima-ken (JP)**
- **Morioka, Hiroyuki Yokohama-shi, Kanagawa-ken (JP)**
- **Kobayashi, Naoya Hiroshima-shi, Hiroshima-ken (JP)**
- **Katamoto, Tsutomu Hatsukaichi-shi, Hiroshima-ken (JP)**
- **Imai, Tomoyuki Hiroshima-shi, Hiroshima-ken (JP)**
- **Iida, Kozo Hiroshima-shi, Hiroshima-ken (JP)**
- **Yasutake, Toshinobu Hiroshima-shi, Hiroshima-ken (JP)**

(74) Representative: **Woods, Geoffrey Corlett**
**J.A. KEMP & CO.**
**Gray's Inn**
**14 South Square**
**London WC1R 5JJ (GB)**

(54) **Catalyst for steam reforming of hydrocarbons and process for producing hydrogen from hydrocarbons**

(57)     A catalyst for reacting hydrocarbon with steam comprising:

(a) a porous composite oxide carrier containing magnesium and aluminum; and
(b) nickel metal in the form of fine particles carried on the porous composite oxide carrier;

wherein the catalyst has a magnesium content of from 5 to 55% by weight, calculated as Mg, based on the weight of the catalyst, an aluminum content of from 5 to 35% by weight, calculated as Al, based on the weight of the catalyst, a nickel content of from 1.2 to 60% by weight, calculated as Ni, based on the weight of the catalyst, a total amount of magnesium, aluminum and nickel of from 50 to 85% by weight, calculated as a sum of Mg, Al and Ni, based on the weight of the catalyst, and a specific surface area of from 40 to 300 m²/g,

and wherein the fine nickel metal particles have an average particle diameter of not more than 10 nm.

**EP 1 285 692 A1**

**Description**

The present invention relates to a catalyst for reacting hydrocarbon with steam, and a process for producing hydrogen from hydrocarbon using the catalyst.

In the conventional processes for producing hydrogen and carbon oxides by reacting hydrocarbon with steam in the presence of a catalyst, i.e., so-called steam reforming processes, there have been used catalysts comprising a carrier composed of a heat-resistant oxide such as $\alpha$-alumina, and a catalytically active component carried on the carrier, e.g., a noble metal such as rhodium and ruthenium, or nickel oxide. However, these catalysts have such a problem that the catalytic activity thereof tends to be deteriorated during the use thereof.

In Japanese Patent Application Laid-Open (KOKAI) No. 11-276893(1999), there is described the catalyst produced by calcining a catalyst precursor obtained by substituting a part of aluminum contained in hydrotalcite containing magnesium and aluminum with an active metal such as rhodium, so as to form the active metal into fine particles.

However, this KOKAI is silent not only about steam reforming reaction and about suggestion for applying the catalyst to the steam reforming reaction, but also about motivation for applying the catalyst to the steam reforming reaction, though the use of the catalyst in a $CO_2$ reforming reaction is described in the specific use examples thereof.

Under the circumstances, as a result of the present inventors' earnest studies for solving the above problems, it has been found that in the case where hydrocarbon and steam are reacted with each other in the presence of a catalyst having a specific surface area of 40 to 300 $m^2$/g, and comprising nickel metal in the form of fine particles carried on a porous composite oxide carrier containing magnesium and aluminum, in which the magnesium content is 5 to 55% by weight (calculated as Mg), the aluminum content is 5 to 35% by weight (calculated as Al), the nickel content is 1.2 to 60% by weight (calculated as Ni), the total amount of magnesium, aluminum and nickel is 50 to 85% by weight (calculated as a sum of Mg, Al and Ni), and the average particle diameter of the fine nickel metal particles is not more than 10 nm, the catalyst can show a much less deterioration in catalytic activity and can maintain a high catalytic activity for a long period of time, and the reaction between the hydrocarbon and steam can be effectively conducted. The present invention has been attained based on the findings.

An object of the present invention is to provide a catalyst used for reacting hydrocarbon with steam at various ratios, which is inexpensive, has a high catalytic activity, and exhibits a less deterioration in catalytic activity independent of the passage of time during the use, and a process for producing hydrogen from hydrocarbon using the catalyst.

To accomplish the aim, in a first aspect of the present invention, there is provided a catalyst for reacting hydrocarbon with steam, having a specific surface area of 40 to 300 $m^2$/g, comprising:

a porous composite oxide carrier containing magnesium and aluminum; and nickel metal in the form of fine particles carried on the porous composite oxide carrier, and having a magnesium content of 5 to 55% by weight, calculated as Mg, based on the weight of the catalyst, an aluminum content of 5 to 35% by weight, calculated as Al, based on the weight of the catalyst, a nickel content of 1.2 to 60% by weight, calculated as Ni, based on the weight of the catalyst, and a total amount of magnesium, aluminum and nickel of 50 to 85% by weight, calculated as a sum of Mg, Al and Ni, based on the weight of the catalyst,
the fine nickel metal particles having an average particle diameter of not more than 10 nm.

In a second aspect of the present invention, there is provided a catalyst for reacting hydrocarbon with steam, having a specific surface area of 55 to 250 $m^2$/g, comprising:

a porous composite oxide carrier containing magnesium and aluminum; and nickel metal in the form of fine particles carried on the porous composite oxide carrier, and having a magnesium content of 10 to 50% by weight, calculated as Mg, based on the weight of the catalyst, an aluminum content of 5 to 30% by weight, calculated as Al, based on the weight of the catalyst, a nickel content of 2 to 55% by weight, calculated as Ni, based on the weight of the catalyst, and a total amount of magnesium, nickel and aluminum of 55 to 80% by weight, calculated as a sum of Mg, Ni and Al, based on the weight of the catalyst,
the fine nickel metal particles having an average particle diameter of 1 to 8 nm, and an atomic ratio of Mg to Al being 1.2:1.0 to 3.0:1.0.

In a third aspect of the present invention, there is provided a process for producing hydrogen from hydrocarbon, comprising:

reacting the hydrocarbon with steam in the presence of a catalyst for reacting hydrocarbon with steam, having a specific surface area of 40 to 300 $m^2$/g, comprising:

a porous composite oxide carrier containing magnesium and aluminum; and nickel metal in the form of fine particles carried on the porous composite oxide carrier, and having a magnesium content of 5 to 55% by weight, calculated as Mg, based on the weight of the catalyst, an aluminum content of 5 to 35% by weight, calculated as Al, based on the weight of the catalyst, a nickel content of 1.2 to 60% by weight, calculated as Ni, based on the weight of the catalyst, and a total amount of magnesium, aluminum and nickel of 50 to 85% by weight, calculated as a sum of Mg, Al and Ni, based on the weight of the catalyst, the fine nickel metal particles having an average particle diameter of not more than 10 nm.

In a fourth aspect of the present invention, there is provided a process for producing hydrogen from hydrocarbon, comprising:

reacting the hydrocarbon with steam in the presence of a catalyst for reacting hydrocarbon with steam, having a specific surface area of 55 to 250 $m^2/g$, comprising:

a porous composite oxide carrier containing magnesium and aluminum; and nickel metal in the form of fine particles carried on the porous composite oxide carrier, and having a magnesium content of 10 to 50% by weight, calculated as Mg, based on the weight of the catalyst, an aluminum content of 5 to 30% by weight, calculated as Al, based on the weight of the catalyst, a nickel content of 2 to 55% by weight, calculated as Ni, based on the weight of the catalyst, and a total amount of magnesium, nickel and aluminum of 55 to 80% by weight, calculated as a sum of Mg, Ni and Al, based on the weight of the catalyst, the fine nickel metal particles having an average particle diameter of 1 to 8 nm, and an atomic ratio of Mg to Al being 1.2:1.0 to 3.0:1.0.

The present invention is described in detail below.

The catalyst of the present invention has such a structure that fine nickel metal particles are carried on a porous composite oxide carrier containing magnesium and aluminum.

The catalyst has a magnesium content of usually 5 to 55% by weight, preferably 10 to 50% by weight (calculated as Mg) based on the weight of the catalyst; and an aluminum content of usually 5 to 35% by weight, preferably 5 to 30% by weight (calculated as Al) based on the weight of the catalyst. Also, the content of nickel carried on the carrier is usually 1.2 to 60% by weight, preferably 2 to 55% by weight (calculated as Ni) based on the weight of the catalyst.

When the nickel content is more than 60% by weight, the adhesion of carbon to the catalyst, a so-called coking phenomenon may be caused since the fine nickel metal particles are grown into large particles having a particle size of more than 10 nm, resulting in tendency toward deterioration in catalytic activity of the obtained catalyst. When the nickel content is less than 1.2% by weight, it may be difficult to obtain the aimed high catalytic activity. From the economical viewpoint, the less nickel content is preferred as long as a sufficient catalytic activity can be attained. A total content of magnesium, aluminum and nickel is usually 50 to 85% by weight, preferably 55 to 80% by weight (calculated as a sum of Mg, Al and Ni) based on the weight of the catalyst. The balance thereof is composed of oxygen.

In the catalyst of the present invention, the atomic ratio of Mg to Al is preferably 1.0:1.0 to 4.0:1.0, more preferably 1.2:1.0 to 3.0:1.0.

The catalyst of the present invention has a nickel component in the form of fine metal particles carried on the carrier. The fine nickel metal particles have an average particle diameter of usually not more than 10 nm, preferably not more than 8 nm. The lower limit of the average particle diameter of the fine nickel metal particles is preferably 1 nm. When the average particle diameter of the fine nickel metal particles is more than 10 nm, the coking phenomenon may be caused as described above, resulting in tendency toward deterioration in catalytic activity of the obtained catalyst.

The catalyst of the present invention can be produced by calcining and reducing hydrotalcite as a precursor, and has a porous structure. The catalyst has a BET specific surface area larger than that of the hydrotalcite used as a precursor, and specifically is usually 40 to 300 $m^2/g$, preferably 55 to 250 $m^2/g$.

In the case where the gas hourly space velocity of hydrocarbon supplied is 2,500 $hr^{-1}$, a methane conversion percentage of the catalyst of the present invention is usually not less than 85%. The upper limit of the methane conversion percentage is usually 100%, and is preferably 99% from the industrial and economical viewpoints. Also, the reaction product gas has a hydrogen content of usually not less than 65 mol%, preferably not less than 68 mol%. The upper limit of the hydrogen content of the reaction product gas is usually 80 mol%, and preferably 78 mol% from the industrial and economical viewpoints.

In the case where the gas hourly space velocity of hydrocarbon supplied is 10,000 $hr^{-1}$, the methane conversion percentage of the catalyst of the present invention is usually not less than 55%. The upper limit of the methane conversion percentage of the catalyst is usually 100%, and is preferably 98% from the industrial and economical viewpoints. Also, the reaction product gas has a hydrogen content of usually not less than 50 mol%, preferably not less than 52 mol%. The upper limit of the hydrogen content of the reaction product gas is usually 80 mol%, preferably 75 mol% from the industrial and economical viewpoints, and more preferably 70 mol% in the consideration of high catalytic activity.

The catalyst of the present invention can maintain a high catalytic activity for a long period of time. Even though the catalyst is continuously used in the reaction for usually not less than 500 hours, preferably not less than 600 hours, the catalyst can still exhibit the substantially same methane conversion percentage and hydrogen content as those of the catalyst used for 100 hours. The reaction-operating time (effective reaction time) of the catalyst is preferably as long as possible, and the upper limit of the reaction-operating time is usually 50,000 hours, and is preferably 40,000 hours from the industrial and economical viewpoints.

The catalyst of the present invention is composed of a porous reduced product obtained by calcining a hydrotalcite compound containing magnesium, aluminum and nickel as a precursor, which is represented by the following formula (1) to obtain a porous calcined product, and then reducing the porous calcined product.

$$[\{Mg_{x1}Ni_{x2}\}_{1-y}Al_y(OH)_2]^{a+}[An \cdot nH_2O]^{b-} \tag{1}$$

wherein An represents an anion, e.g., at least one ion selected from the group consisting of inorganic ions such as a carbonate ion, a chlorine ion and a nitrate ion, and organic ions such as a fatty acid ion; n is an integer; x1 represents is usually 0.025 to 0.30, preferably 0.05 to 0.25; x2 represents usually 0.01 to 0.30, preferably 0.02 to 0.25; y represents usually 0.025 to 0.25, preferably 0.05 to 0.25; and a total amount of magnesium, nickel and aluminum (x1 + x2 + y) is usually 0.50 to 0.85, preferably 0.55 to 0.80.

The atomic ratio of Mg to Al contained in the hydrotalcite is preferably 1.0:1.0 to 4.0:1.0, more preferably 1.2:1.0 to 3.0:1.0.

When the magnesium content x1 exceeds the above-specified range, plate-shaped $Mg(OH)_2$ having a large plate surface diameter tends to be mixed in the hexagonal plate-shaped hydrotalcite. The catalyst obtained from such a mixture fails to show a sufficient catalytic activity because it may be difficult to pass a reactant gas therethrough due to the large plate surface diameter of the plate-shaped $Mg(OH)_2$, and further the catalyst may fail to show a sufficient molding strength. When the magnesium content is less than the above-specified range, fine particles of $Al(OH)_3$ or AlOOH tend to be mixed in the hexagonal plate-shaped hydrotalcite. In the case of the catalyst obtained from such a mixture, the fine Ni metal particles tend to be inhibited from being uniformly deposited and distributed on the carrier, resulting in deteriorated catalytic activity.

The hydrotalcite has a specific surface area of usually 5 to 250 $m^2/g$, preferably 7 to 200 $m^2/g$. When the specific surface area of the hydrotalcite is less than 5 $m^2/g$, it may be difficult to mold the catalyst obtained by using such a hydrotalcite because the individual particles have too large plate surface diameter and thickness. When the specific surface area of the hydrotalcite is more than 250 $m^2/g$, it may be difficult to subject the obtained catalyst to water-washing and filtration because the individual particles are too fine.

The hydrotalcite containing magnesium, aluminum and nickel can be produced by the following method. That is, water-soluble salts of magnesium, aluminum and nickel such as nitrates thereof are added and dissolved in water at predetermined ratios to obtain an aqueous mixed solution. Then, an aqueous solution containing an alkaline compound such as sodium carbonate, sodium hydrogen carbonate and sodium hydroxide (i.e., aqueous alkali solution) is added to the aqueous mixed solution to adjust the pH thereof to usually not less than 6, preferably not less than 9, thereby forming a precipitate. After the aqueous solution containing the thus obtained precipitate is aged, the precipitate is separated therefrom and then dried, thereby obtaining the hydrotalcite containing magnesium, aluminum and nickel in the form of a layer inorganic compound.

The magnesium salt and the nickel salt are preferably in the form of divalent salts, and the aluminum salt is preferably in the form of a trivalent salt. The upper limit of the pH value of the aqueous solution upon forming the precipitate is preferably 13, more preferably 12.5. The aging temperature is usually 60 to 100°C, preferably 70 to 95°C, and the aging time is usually 2 to 24 hours, preferably 6 to 15 hours.

The calcining temperature used for obtaining the porous calcined product is usually 400 to 1,300°C, preferably 600 to 1,250°C. The calcining time is usually 1 to 20 hours, preferably 2 to 10 hours. As the atmosphere for the calcination, there may be usually used air or an inert gas such as nitrogen gas and argon gas. Among them, air is preferred.

When the hydrotalcite is calcined, there is obtained the porous calcined product composed of a mixed phase of oxides containing magnesium, aluminum and nickel which is represented by any of the following formulae (2) and (3):

$$(Mg_{x1}Ni_{x2}Al_y)O_{(x1+x2+y)3/2} \tag{2}$$

$$(Mg_{x1}Ni_{x2})O \cdot Al_2O_3 \tag{3}$$

wherein x1, x2 and y have the same meanings as defined above.

As to the crystal structure of the above oxides containing magnesium, aluminum and nickel, the oxides represented by the above formula (2) have a periclase-type structure, and the oxides represented by the above formula (3) have a spinel-type structure. Thus, magnesium, aluminum and nickel are uniformly and sufficiently dispersed in the form of oxides in the porous calcined product.

The porous calcined product has the magnesium content of usually 5 to 50% by weight, preferably 10 to 45% by weight (calculated as Mg) based on the weight of the porous calcined product; the aluminum content of usually 5 to 35% by weight, preferably 5 to 30% by weight (calculated as Al) based on the weight of the porous calcined product; and the nickel content of usually 1.5 to 50% by weight, preferably 2 to 45% by weight (calculated as Ni) based on the weight of the porous calcined product. The total amount of magnesium, aluminum and nickel in the porous calcined product is usually 50 to 85% by weight, preferably 55 to 80% by weight (calculated as a sum of Mg, Al and Ni) based on the weight of the porous calcined product. The balance thereof is oxygen.

Since the porous calcined product has a porous structure by the calcination, the BET specific surface area thereof becomes larger than that of the hydrotalcite, and is usually 40 to 300 $m^2$/g, preferably 55 to 250 $m^2$/g.

The porous calcined product is then heat-treated and reduced in a reducing atmosphere, thereby obtaining a porous reduced product. By subjecting the porous calcined product to the heat-treatment and reduction, only the nickel component contained in the oxides containing magnesium, aluminum and nickel is deposited into nickel metal in the form of fine particles, thereby forming such a structure that the nickel metal is carried on the surface and/or pore surface of porous particles composed of oxides containing magnesium and aluminum.

The reduction treatment for obtaining the porous reduced product may be conducted in vacuum or in a gas such as nitrogen, argon and hydrogen. Among these methods, the hydrogen reduction method using a hydrogen gas is preferred. The hydrogen concentration in the reducing atmosphere is usually 5 to 100% v/v, preferably 10 to 50% v/v. The reducing temperature is usually 650 to 900°C, preferably 700 to 800°C, and the reducing time is usually 1 to 20 hours, preferably 2 to 10 hours.

In the production of the catalyst according to the present invention, the particle size of the fine nickel metal particles deposited upon the above reduction treatment is adjusted to not more than 10 nm by controlling the nickel content in the hydrotalcite as a precursor, the calcining temperature and time, the reducing temperature and time or the like. When the nickel content of the hydrotalcite becomes smaller, the use of a higher calcining or reducing temperature is preferred to shorten the calcining or reducing time.

The catalyst of the present invention may be in the form of particles, and also have various other shapes such as a granular shape, a cylindrical shape, a tubular honeycomb shape or the like.

In the consideration of good filling property into a packed tower or appropriate spacing between individual catalyst particles, the catalyst has an average major axis diameter of preferably not more than 10 mm, more preferably 2 to 4 mm. Upon the use of the catalyst, the shape and size of the catalyst can be appropriately selected according to objects and applications thereof.

The catalyst can be enhanced in properties such as moldability and strength, if required, by adding inorganic compounds and/or organic compounds to the hydrotalcite, porous calcined product or porous reduced product, or coating the hydrotalcite, porous calcined product or porous reduced product with the inorganic compounds and/or organic compounds.

Next, the process for reacting hydrocarbon with steam in the presence of the catalyst of the present invention is described.

In order to react the hydrocarbon with steam in the presence of the catalyst of the present invention, a mixture of the hydrocarbon and steam is contacted with the catalyst of the present invention. In this case, the contact temperature (reaction temperature) is usually 600 to 850°C, preferably 750 to 810°C. The gas hourly space velocity (GHSV) of the mixture is usually 2,500 to 250,000 $hr^{-1}$, preferably 2,500 to 50,000 $hr^{-1}$. The amount of steam used is usually 1.3 to 3.0 moles, preferably 1.5 to 2.5 moles per mole of carbon contained in the hydrocarbon.

As the hydrocarbon, there may be used hydrocarbons having usually 1 to 6 carbon atoms, preferably 1 to 4 carbon atoms. Examples of the hydrocarbons may include methane, ethane, propane, butane or the like.

The catalyst of the present invention can show a much less deterioration in catalytic activity independent of the passage of time during the use thereof, and can maintain its high catalytic activity for a long period of time. Also, even when the gas hourly space velocity of the reactant mixture is as high as not less than 100,000 $hr^{-1}$, the catalyst of the present invention can achieve a high reactivity and a high hydrogen yield.

The catalyst of the present invention can be used as a catalyst for producing hydrogen by reacting hydrocarbon with steam at various ratios. Upon use, the catalyst shows a much less deterioration in catalytic activity, and can maintain a high catalytic activity for a long period of time.

Further, by using the catalyst of the present invention, hydrocarbon and steam can be efficiently reacted with each other to produce hydrogen.

EXAMPLES

The present invention is described in more detail by Examples and Comparative Examples, but the Examples are only illustrative and, therefore, not intended to limit the scope of the present invention.

Various properties were evaluated by the following methods.

(1) The amounts of Mg, Al and Ni contained in the hydrotalcite, porous calcined product and porous reduced product were expressed by the values measured by an inductively coupled high-frequency plasma (ICP) atomic emission spectroscopic device "SPS-4000 Model" (manufactured by Seiko Denshi Kogyo Co., Ltd.).

(2) The porosity of the calcined product and reduced product was determined by observing each product at magnification of 300,000 times by using a transmission electron microscope "100S" (manufactured by Nippon Denshi Co., Ltd.; voltage: 100 kV). Further, the porosity was also determined by remarkable increase in specific surface area of each product when measured by a Monosorb (full-automatic surface measuring device "Multi-Sorb 12" manufactured by Yuasa Ionics Co., Ltd.; gas used: nitrogen or nitrogen plus hydrogen).

(3) The phase constituting the porous calcined product obtained by calcining the hydrotalcite was identified using an X-ray Diffractometer "RINT 2500" (manufactured by Rigaku Denki Co., Ltd.; voltage: 40 kV; current: 300 mA; tube: Cu; goniometer: wide-angle goniometer; emitting slit: 1°; scattering slit: 1°; light-receiving slit: 0.5°; fixing time: 0.5 sec; step angle: 0.02°; measuring angle: 3°-120°).

(4) It was confirmed that the nickel component contained in the porous reduced product was nickel metal, was identified under the same conditions as described above using the said X-ray diffractometer; and that the peaks due to oxides of magnesium and aluminum, and nickel metal were observed from the X-ray diffraction pattern. Further, the porous reduce product was measured by a transmission electron microscope "JEM-3000F" (manufactured by Nippon Denshi Co., Ltd.; voltage: 300 kV) equipped with an energy dispersive X-ray diffractometer "Voyager-III" (manufactured by Norman Co., Ltd.) to determine the size of fine particles deposited on the surface or pore surface thereof, and identify that the fine particles were nickel metal by composition analysis thereof.

(5) The phase constituting the porous reduced product was also identified under the same conditions as described above using the X-ray diffractometer. Also, when the calcined product was reduced in a reducing atmosphere, e. g., in $H_2$ and $N_2$ gases ($H_2/N_2$ = 20/80% v/v) using a thermal analysis measuring device "EXSTAR 6000" (manufactured by Seiko Denshi Kogyo Co., Ltd.) and "TG/DTA 6300" (temperature rise rate: 10°C/min.; scan: 0.2 sec.; measuring temperature range: from room temperature to reducing temperature), the weight reduction was identical to the amount of nickel metal obtained by reacting only the nickel component of the calcined product. Therefore, it was confirmed that magnesium and aluminum contained in the reduced product were still kept in the form of oxides.

Example 1:

240.38 g (0.938 mol) of $Mg(NO_3)_2 \cdot 6H_2O$, 54.52 g (0.188 mol) of $Ni(NO_3)_2 \cdot 6H_2O$ and 140.67 g (0.375 mol) of $Al(NO_3)_3 \cdot 9H_2O$ were added to 2.0 liters of pure water, thereby preparing an aqueous solution containing Mg, Ni and Al.

Then, after the thus obtained aqueous solution was allowed to stand at 45°C for one hour, an aqueous alkali solution prepared by dissolving 145 g of NaOH in 1,500 ml of water, was dropped thereinto for 23 minutes to adjust the pH of the aqueous solution to 10.0, thereby forming a precipitate.

After the aqueous solution containing the precipitate was allowed to stand at 90°C for 12 hours, the precipitate was separated therefrom by filtration, washed with water and then dried at 110°C, thereby obtaining 114 g of hydrotalcite. As a result of analysis of the thus obtained hydrotalcite, it was confirmed that the hydrotalcite contained magnesium, nickel and aluminum in an amount of 17.1% by weight (calculated as Mg), 8.3% by weight (calculated as Ni) and 7.6% by weight (calculated as Al), respectively; the atomic ratio of Mg to Al was 2.501:1; and the BET specific surface area thereof was 85 $m^2$/g.

Successively, the hydrotalcite was calcined in air at 850°C for 5 hours. As a result of analysis of the thus obtained calcined product, it was confirmed that the calcined product contained magnesium, nickel and aluminum in an amount of 32.1% by weight (calculated as Mg), 15.5% by weight (calculated as Ni) and 14.3% by weight (calculated as Al), respectively; the atomic ratio of Mg to Al was 2.501:1; and the BET specific surface area thereof was 127 $m^2$/g.

The calcined product was pulverized, molded and then reduced at 740°C for 6 hours using a hydrogen gas (20% v/v), thereby obtaining a reduced product.

It was determined that the nickel component contained in the thus obtained reduced product (catalyst) was present in the form of fine particles on the surface and/or pore surface of oxides containing Mg and Al. The particle size of the nickel component in the form of ultra-fine particles was 7 nm. As a result of analysis of the reduced product (catalyst), it was confirmed that the reduced product contained magnesium, nickel and aluminum in an amount of 33.6% by weight (calculated as Mg), 16.2% by weight (calculated as Ni) and 14.9% by weight (calculated as Al), respectively; and the atomic ratio of Mg to Al was 2.501:1.

Further, it was confirmed that the reduced product (catalyst) was in the form of granular particles having an average particle diameter of 3 mm; and a BET specific surface area of 127 $m^2$/g.

Example 2:

The hydrotalcite was produced by the same method as defined in Example 1 except that the molar ratio between Mg, Ni and Al was changed to 0.3:0.06:0.24.

As a result of analysis of the thus obtained hydrotalcite, it was confirmed that the hydrotalcite contained magnesium, nickel and aluminum in an amount of 13.1% by weight (calculated as Mg), 6.3% by weight (calculated as Ni) and 11.6% by weight (calculated as Al), respectively; the atomic ratio of Mg to Al was 1.25:1; and the BET specific surface area thereof was 142 $m^2$/g.

Successively, the hydrotalcite was calcined in air at 1,000°C for 3 hours. As a result of analysis of the thus obtained calcined product, it was confirmed that the calcined product contained magnesium, nickel and aluminum in an amount of 24.5% by weight (calculated as Mg), 11.8% by weight (calculated as Ni) and 21.8% by weight (calculated as Al), respectively; the atomic ratio of Mg to Al was 1.25:1; and the BET specific surface area thereof was 187 $m^2$/g.

The calcined product was pulverized, molded and then reduced at 740°C for 8 hours using a hydrogen gas (20% v/v), thereby obtaining a reduced product. It was recognized that the thus obtained reduced product (catalyst) had the same structure as that of the reduced product obtained in Example 1. As a result of analysis of the reduced product, it was confirmed that the reduced product contained magnesium, nickel and aluminum in an amount of 26.2% by weight (calculated as Mg), 12.6% by weight (calculated as Ni) and 23.3% by weight (calculated as Al), respectively; and the atomic ratio of Mg to Al was 1.25:1.

Further, it was confirmed that the reduced product (catalyst) contained a nickel component in the form of ultra-fine particles of 5 nm in size which were deposited and carried thereon; and the reduced product was in the form of granular particles having an average particle diameter of 3 mm and a BET specific surface area of 187 $m^2$/g.

Example 3:

308.4 g (1.25 mol) of Mg(SO$_4$) · 7H$_2$O, 65.73 g (0.25 mol) of Ni(SO$_4$)·6H$_2$O and 166.6 g (0.25 mol) of Al$_2$(SO$_4$)$_3$·18H$_2$O were added to 2.0 liters of pure water, thereby preparing an aqueous solution containing Mg, Ni and Al.

Then, after the thus obtained aqueous solution was mixed with 0.18 mol of Na$_2$CO$_3$ and allowed to stand at 95°C for 2 hours, an aqueous alkali solution prepared by dissolving 87 g of NaOH in 1,000 ml of water, was dropped thereinto for 37 minutes to adjust the pH of the aqueous solution to 10.0, thereby forming a precipitate.

After the aqueous solution containing the precipitate was allowed to stand at 90°C for 12 hours, the precipitate was separated therefrom by filtration, washed with water and then dried at 110°C, thereby obtaining hydrotalcite. As a result of analysis of the thus obtained hydrotalcite, it was confirmed that the hydrotalcite contained magnesium, nickel and aluminum in an amount of 17.1% by weight (calculated as Mg), 8.3% by weight (calculated as Ni) and 7.6% by weight (calculated as Al), respectively; the atomic ratio of Mg to Al was 2.5:1; and the BET specific surface area thereof was 128 $m^2$/g.

Successively, the hydrotalcite was calcined in air at 800°C for 6 hours. As a result of analysis of the thus obtained calcined product, it was confirmed that the calcined product contained magnesium, nickel and aluminum in an amount of 32.1% by weight (calculated as Mg), 15.5% by weight (calculated as Ni) and 14.3% by weight (calculated as Al), respectively; the atomic ratio of Mg to Al was 2.5:1; and the BET specific surface area thereof was 176 $m^2$/g.

The calcined product was pulverized, molded and then reduced at 750°C for 5 hours using a hydrogen gas (20% v/v), thereby obtaining a reduced product. It was recognized that the thus obtained reduced product (catalyst) had the same structure as that of the reduced product obtained in Example 1. As a result of analysis of the reduced product, it was confirmed that the reduced product contained magnesium, nickel and aluminum in an amount of 33.6% by weight (calculated as Mg), 16.2% by weight (calculated as Ni) and 14.9% by weight (calculated as Al), respectively; and the atomic ratio of Mg to Al was 2.5:1.

Further, it was confirmed that the reduced product contained a nickel component in the form of ultra-fine particles of 8 nm in size which were deposited and carried thereon; and the reduced product was in the form of granular particles having an average particle diameter of 5 mm and a BET specific surface area of 176 $m^2/g$.

Example 4:

352.56 g (1.375 mol) of $Mg(NO_3)_2 \cdot 6H_2O$, 36.35 g (0.125 mol) of $Ni(NO_3)_2 \cdot 6H_2O$ and 187.57 g (0.5 mol) of Al $(NO_3)_3 \cdot 9H_2O$ were added to 2.0 liters of pure water, thereby preparing an aqueous solution containing Mg, Ni and Al.

Then, an aqueous alkali solution prepared by dissolving 180 g of NaOH in 1,500 ml of water, was dropped into the above-prepared aqueous solution containing Mg, Ni and Al for 15 minutes to adjust the pH of the aqueous solution to 11, thereby forming a precipitate. The obtained aqueous solution containing the precipitate was allowed to stand at 50°C for one hour.

After the aqueous solution containing the precipitate was further allowed to stand at 80°C for 8 hours, the precipitate was separated therefrom by filtration, washed with water and then dried at 60°C, thereby obtaining 150 g of hydrotalcite. As a result of analysis of the thus obtained hydrotalcite, it was confirmed that the hydrotalcite contained magnesium, nickel and aluminum in an amount of 22.1% by weight (calculated as Mg), 4.9% by weight (calculated as Ni) and 8.9% by weight (calculated as Al), respectively; the atomic ratio of Mg to Al was 2.75:1; and the BET specific surface area thereof was 22 $m^2/g$.

Successively, the obtained hydrotalcite was calcined at 1,200°C for 2 hours, thereby obtaining a porous calcined product of a spinel and periclase mixed structure having a BET specific surface area of 58 $m^2/g$. As a result of analysis of the thus obtained calcined product, it was confirmed that the calcined product contained magnesium, nickel and aluminum in an amount of 37.0% by weight (calculated as Mg), 8.1% by weight (calculated as Ni) and 15.0% by weight (calculated as Al), respectively; and the atomic ratio of Mg to Al was 2.75:1.

The calcined product was pulverized, molded and then reduced at 800°C for 8 hours using a hydrogen gas (20% v/v), thereby obtaining a reduced product. It was recognized that the thus obtained reduced product had the same structure as that of the reduced product obtained in Example 1. As a result of analysis of the reduced product (catalyst), it was confirmed that the reduced product contained magnesium, nickel and aluminum in an amount of 37.9% by weight (calculated as Mg), 8.3% by weight (calculated as Ni) and 15.3% by weight (calculated as Al), respectively; and the atomic ratio of Mg to Al was 2.75:1.

Further, it was confirmed that the reduced product contained a nickel component in the form of ultra-fine particles of 3 nm in size which were deposited and carried thereon; and the reduced product was in the form of granular particles having an average particle diameter of 3 mm and a BET specific surface area of 58 $m^2/g$.

Examples 5 to 8:

<Reaction using catalyst>

20 cc of each of the catalyst particles obtained in Examples 1 to 4 were filled in a quartz tube (diameter: 30 mm) to form a catalyst tube.

The respective catalyst tubes (reactors) were first filled with an $N_2$ gas and sealed. Then, after heating the catalyst tubes to 740°C at a temperature rise rate of 20°C/min., steam was passed therethrough for 30 minutes. 30 minutes after initiation of the passage of steam, methane was added to steam to pass the mixed gas through the catalyst tubes. In the reaction, the reaction pressure was 0.3 MPa; and the gas hourly space velocity of methane was 2,500 $hr^{-1}$ (or 10,000 $hr^{-1}$). Also, the molar ratios of steam to carbon in the reactions conducted using the catalysts obtained in Examples 1 to 4 were 1.6, 2.2, 1.6 and 2.0, respectively.

The results of the reactions are shown in Tables 1 and 2 wherein Table 1 shows a relationship between a reaction-operating time and a methane conversion percentage; and Table 2 shows a relationship between a reaction-operating time and a hydrogen content (mol%) in a reaction product gas.

Meanwhile, the methane conversion percentage shown in Table 1 is calculated according to the following formula (4) :

Methane Conversion Percentage =

$$\{1 - A/B\} \times 100 \ (\%) \tag{4}$$

wherein A represents a methane flow rate (mol/hr) at an outlet of the reactor; and B represents a methane flow rate (mol/hr) at an inlet of the reactor.

As a result, it was confirmed that no coking was caused in any of the reactions using the catalysts obtained in Examples 1 to 4.

Table 1

| Examples | Kind of catalyst | GHSV (hr-1) |
|---|---|---|
| Example 5 | Example 1 | 2,500 |
| | | 10,000 |
| Example 6 | Example 2 | 2,500 |
| | | 10,000 |
| Example 7 | Example 3 | 2,500 |
| | | 10,000 |
| Example 8 | Example 4 | 2,500 |
| | | 10,000 |

Table 1 (continued)

| Examples | Methane conversion percentage (%) | | | | |
|---|---|---|---|---|---|
| | Operating time (hr) | | | | |
| | 100 | 300 | 400 | 500 | 600 |
| Example 5 | 88.3 | 88.4 | 88.5 | 88.3 | 88.2 |
| | 58.1 | 58.2 | 59.0 | 59.9 | 58.6 |
| Example 6 | 87.5 | 87.3 | 87.7 | 87.6 | 87.5 |
| | 57.5 | 57.7 | 57.9 | 57.6 | 57.5 |
| Example 7 | 87.0 | 86.9 | 86.6 | 87.0 | 87.2 |
| | 57.0 | 56.5 | 56.0 | 56.2 | 56.5 |
| Example 8 | 88.0 | 87.5 | 87.2 | 87.5 | 87.2 |
| | 58.0 | 58.5 | 58.7 | 58.2 | 58.2 |

## Table 2

| Examples | Kind of catalyst | GHSV (hr-1) |
|---|---|---|
| Example 5 | Example 1 | 2,500 |
| | | 10,000 |
| Example 6 | Example 2 | 2,500 |
| | | 10,000 |
| Example 7 | Example 3 | 2,500 |
| | | 10,000 |
| Example 8 | Example 4 | 2,500 |
| | | 10,000 |

## Table 2 (continued)

| Examples | Hydrogen content (mol%) | | | | |
|---|---|---|---|---|---|
| | Operating time (hr) | | | | |
| | 100 | 300 | 400 | 500 | 600 |
| Example 5 | 74.2 | 75.0 | 75.2 | 73.8 | 74.6 |
| | 53.0 | 53.7 | 53.8 | 56.1 | 54.2 |
| Example 6 | 68.9 | 69.0 | 70.1 | 70.5 | 71.2 |
| | 57.2 | 57.0 | 57.4 | 57.3 | 57.2 |
| Example 7 | 72.1 | 71.6 | 71.5 | 71.4 | 71.0 |
| | 53.0 | 54.0 | 53.5 | 54.5 | 54.0 |
| Example 8 | 70.6 | 71.5 | 71.2 | 71.0 | 70.9 |
| | 54.2 | 54.3 | 54.4 | 54.0 | 53.5 |

## Claims

1. A catalyst for reacting hydrocarbon with steam comprising:

    (a) a porous composite oxide carrier containing magnesium and aluminum; and
    (b) nickel metal in the form of fine particles carried on the porous composite oxide carrier;

    wherein the catalyst has a magnesium content of from 5 to 55% by weight, calculated as Mg, based on the weight of the catalyst, an aluminum content of from 5 to 35% by weight, calculated as Al, based on the weight of the catalyst, a nickel content of from 1.2 to 60% by weight, calculated as Ni, based on the weight of the catalyst, a total amount of magnesium, aluminum and nickel of from 50 to 85% by weight, calculated as a sum of Mg, Al and Ni, based on the weight of the catalyst, and a specific surface area of from 40 to 300 $m^2/g$,

and wherein the fine nickel metal particles have an average particle diameter of not more than 10 nm.

2. A catalyst according to claim 1, wherein the atomic ratio of Mg to Al contained in the porous composite oxide carrier is from 1.0:1.0 to 4.0:1.0.

3. A catalyst according to claim 1 or 2, wherein the catalyst has a specific surface area of from 55 to 250 $m^2/g$; a magnesium content of from 10 to 50% by weight, calculated as Mg, based on the weight of the catalyst; an aluminum content of from 5 to 30% by weight, calculated as Al, based on the weight of the catalyst; a nickel content of from 2 to 55% by weight, calculated as Ni, based on the weight of the catalyst; a total amount of magnesium, nickel and aluminum of from 55 to 80% by weight, calculated as a sum of Mg, Ni and Al, based on the weight of the catalyst; and an atomic ratio of Mg to Al contained in the porous composite oxide of from 1.2:1.0 to 3.0:1.0,

and wherein the fine nickel metal particles have an average particle diameter of from 1 to 8 nm.

4. A catalyst according to any one of the preceding claims, wherein the catalyst has an average major axis diameter of not more than 10mm.

5. A process for producing hydrogen from hydrocarbon, comprising:

reacting the hydrocarbon with steam in the presence of the catalyst as defined in any one of the preceding claims.

6. A process according to claim 5, wherein the steam is present in an amount of from 1.3 to 3.0 moles per mole of carbon contained in the hydrocarbon.

7. A process according to claim 5 or 6, wherein a gas hourly space velocity of the hydrocarbon is from 2,500 to 250,000 $hr^{-1}$.

8. A process according to claim 5, 6 or 7, wherein the hydrocarbon and steam were reacted at a temperature of from 600 to 850°C.

9. A process according to any one of claims 5 to 8, wherein the hydrocarbon has from one to four carbon atoms.

10. Use of a catalyst according to any one of claims 1 to 4 for producing hydrogen from a hydrocarbon.

**European Patent Office**

**EUROPEAN SEARCH REPORT**

Application Number

EP 02 25 5757

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 25142 A (BP AMOCO CORP) 12 April 2001 (2001-04-12) * claim 5 * * examples 8,9,21 * | 1-10 | B01J23/755 B01J35/02 C01B3/40 |
| X | US 3 932 534 A (FUKUNAGA YASUHISA ET AL) 13 January 1976 (1976-01-13) * column 7, line 22 - column 9, line 9; example REFERENTIAL * | 1-4 | |
| X | MORIOKA H ET AL: "Partial oxidation of methane to synthesis gas over supported Ni catalysts prepared from Ni-Ca/Al-layered double hydroxide" APPLIED CATALYSIS A: GENERAL, ELSEVIER SCIENCE, AMSTERDAM, NL, vol. 215, no. 1-2, 13 July 2001 (2001-07-13), pages 11-19, XP004246304 ISSN: 0926-860X section 2.2 "Preparation of spc Ni/Mg-Al" * page 13, left-hand column, last paragraph * | 1-4 | |
| X | US 3 791 993 A (ROSTRUP NIELSEN J) 12 February 1974 (1974-02-12) * example 4 * * abstract; claims 7,8 * | 1-10 | **TECHNICAL FIELDS SEARCHED (Int.Cl.7)**<br><br>B01J |
| X | US 5 714 092 A (GEUS JOHN WILHELM ET AL) 3 February 1998 (1998-02-03) * abstract * * column 6, line 4 - line 38 * | 1-10 | |

The present search report has been drawn up for all claims

| Place of search | Date of completion of the search | Examiner |
|---|---|---|
| MUNICH | 3 December 2002 | Besselmann, S |

EPO FORM 1503 03.82 (P04C01)

**ANNEX TO THE EUROPEAN SEARCH REPORT
ON EUROPEAN PATENT APPLICATION NO.**                EP 02 25 5757

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2002

| Patent document cited in search report | | Publication date | | Patent family member(s) | | Publication date |
|---|---|---|---|---|---|---|
| WO 0125142 | A | 12-04-2001 | AU | 7739400 | A | 10-05-2001 |
| | | | EP | 1135327 | A1 | 26-09-2001 |
| | | | WO | 0125142 | A1 | 12-04-2001 |
| US 3932534 | A | 13-01-1976 | JP | 1057872 | C | 31-07-1981 |
| | | | JP | 50004001 | A | 16-01-1975 |
| | | | JP | 55050704 | B | 19-12-1980 |
| US 3791993 | A | 12-02-1974 | AT | 295016 | B | 27-12-1971 |
| | | | BE | 716424 | A | 04-11-1968 |
| | | | CH | 512259 | A | 15-09-1971 |
| | | | CS | 168503 | B2 | 29-06-1976 |
| | | | DE | 1767741 | A1 | 23-09-1971 |
| | | | DK | 129688 | B | 11-11-1974 |
| | | | ES | 354880 | A1 | 16-11-1969 |
| | | | FI | 50209 | B | 30-09-1975 |
| | | | FR | 1570846 | A | 13-06-1969 |
| | | | GB | 1182829 | A | 04-03-1970 |
| | | | JP | 48013828 | B | 01-05-1973 |
| | | | NL | 6808233 | A ,B, | 13-12-1968 |
| | | | SE | 327973 | B | 07-09-1970 |
| | | | US | 3926583 | A | 16-12-1975 |
| | | | US | RE28655 | E | 16-12-1975 |
| | | | YU | 134168 | A ,B | 31-08-1973 |
| US 5714092 | A | 03-02-1998 | NL | 9300833 | A | 01-12-1994 |
| | | | AT | 159231 | T | 15-11-1997 |
| | | | AU | 6858694 | A | 12-12-1994 |
| | | | DE | 69406311 | D1 | 20-11-1997 |
| | | | DE | 69406311 | T2 | 23-04-1998 |
| | | | DK | 738235 | T3 | 18-05-1998 |
| | | | EP | 0738235 | A1 | 23-10-1996 |
| | | | ES | 2110757 | T3 | 16-02-1998 |
| | | | GR | 3025614 | T3 | 31-03-1998 |
| | | | JP | 9502414 | T | 11-03-1997 |
| | | | WO | 9426656 | A1 | 24-11-1994 |
| | | | NO | 954543 | A | 10-11-1995 |

EPO FORM P0459

For more details about this annex : see Official Journal of the European Patent Office, No. 12/82